# EUROPEAN PATENT APPLICATION

(11) **EP 1 813 850 A2**
(43) Date of publication of application: **01.08.2007**
(21) Application number: 05380272.4
(22) Date of filing: 20.12.2005
(51) Int. Cl.: F16L 19/08, F16L 27/107

(54) **Connection device for plastic pipes**

(30) Priority: 14.11.2005 ES 200502489
(71) Applicant: Plomifera Castellana, S.L, 28600 Navalcarnero (Madrid) (ES)
(72) Inventor: Martinez Muneta, Maria Luisa, 28600 Navalcarneo (Madrid) (ES)
(74) Representative: Sanchez del Campo Gonzalez de Ubierna, Ramon

(57) **Abstract**

The device enables two pipes to be connected in an extremely quick, simple manner that is almost instantaneous, without the need for any mechanical tools and ensuring a sealed connection. To do this, the device takes the form of a tubular body (1) that can be straight, L-shaped or having any other form, with a central perimeter partition (3) between two perimeter alignments of radial flanges (5) that enable the bayonet connection of respective coaxial couplings (6) to the ends of the body (1) and have slanting inner flanges (12) so that, when sections of pipe (2) are inserted into the ends of the body (1), the connection is sealed by gaskets (9) and mechanically secured as the flanges (12) on the metal couplings (6) are driven into the plastic wall of the pipe when it is liable to become disconnected from the body (1), thus locking it in place.

## Description

### OBJECT OF THE INVENTION

The present invention relates to a connection device that is specially designed for plastic pipes, with which it is possible to carry out the connection, change of direction, etc., of pipes through which fluids flow under pressure in an extremely quick, simple and efficient manner.

The object of the invention is to achieve a perfect coupling between plastic pipes that is absolutely watertight and where the assembly of the pipe with the fitting is performed quickly and simply, without the need to use any kind of mechanical tool.

The device is particularly suitable for use with reticulated polyethylene pipes and multilayer pipes, but it is equally valid for any other type of plastic pipe.

### BACKGROUND OF THE INVENTION

In the preferred field of practical application of the invention, that of reticulated polyethylene pipes and that of multilayer pipes made from plastic and aluminium, the most commonly used coupling technique has, until recently, been the "slip coupling".

One device that enables said connection to be made consists of a metal body and compression couplings that are also made of metal. This technique is based on the pressure applied by the coupling to the pipe, which ensures that the latter is thus secured to the fitting. In order to assemble this type of devices and fittings, the pipe is cold countersunk, clamped over the fitting and the coupling is inserted into the pipe by machines that apply a rear axial compression and pressing force thereto.

Another type of fittings have appeared on the market more recently, which consist of a metal or plastic body with pre-assembled metal compression couplings on the body of said fittings. The basis for the coupling technique used between these fittings and reticulated polyethylene or multilayer pipes is similar to the previous technique: the coupling presses the pipe against the body of the fitting. However, in this case, the assembly is performed using special tools that apply a radial compression force to the metal coupling. It is necessary to point out that, in the case of the fittings used in the connection of multilayer pipes, the assembly is sealed by means of rubber O-rings between the teat of the fitting and the inner wall of the pipe.

### DESCRIPTION OF THE INVENTION

The device proposed by the invention solves the problem of the previous technology that is inherent in the fact that it is complicated to assemble and requires the use of special tools, so that, as has been mentioned above, the assembly of the pipe and the device may be performed quickly, simply and without the need for any type of mechanical tool.

To do this and in more specific terms, the device being recommended has a tubular body which constitutes the connector itself and can be rectilinear, L-shaped, T-shaped, etc., but in all cases includes perimeter slots for the installation of respective gaskets on at least one of its branches, upon which radial pressure is to be applied by the plastic pipe, the inner diameter of which is adapted to the outer diameter of the aforementioned tubular body.

Additionally, said branch includes a number of radial flanges inside the slots, next to the gaskets, that enable the connection by bayonet or pressure of a metal coupling that will be pre-assembled on the tubular body and which forms a cylindrical housing into which to insert the corresponding end of the plastic pipe, but with the special feature that said metal coupling includes a number of slanting inner tabs, formed at the mouth thereof or at any other point along the cylindrical body and duly orientated in order to favour the penetration of the pipe into said housing and so that they are driven into the wall thereof when the pipe is liable to disconnect from the tubular body.

With the device of the invention it is not necessary for the outer diameter of said connection to be any greater than the outer diameter of the pipe at the point of connection, which makes it considerably easier to embed installations in walls or suchlike, without the need to considerably widen the channels in the walls in areas where there are connections, as is usually the case. At the same time, the assembly time is substantially reduced and it is not necessary to use mechanical tools, as the device enables pipes to be assembled manually by simply aligning the device and applying a small amount of axial pressure thereto.

### DESCRIPTION OF THE DRAWINGS

To complement this description and in order to aid a better understanding of the invention's characteristics, according to a preferred practical embodiment thereof, there is a set of illustrative and non-limiting drawings integral to said description, which are as follows:
Figure 1.- Shows a side elevation view of the tubular body that acts as a connector between two branches of pipe, in the specific case wherein said sections are to be coaxially coupled.
Figure 2.- Shows, according to a perspective view, one of the complementary couplings of the body shown in the previous figure.
Figure 3.- Shows a longitudinal and diametric cross-section view of the body shown in figure 1, to which two couplings such as that of figure 2 are connected, one of which is in a working position, axially securing the corresponding plastic pipe.
Figure 4.- Finally shows a side elevation view and diametric cross-section of an alternative embodiment for the coupling shown in figure 2.

### PREFERRED EMBODIMENT OF THE INVENTION

In view of the figures summarised above, it can be seen how the device proposed by the invention is formed from a tubular body (1), which in the chosen example of a practical embodiment takes a rectilinear form, so that the device is to coaxially connect two sections of pipe (2) but which, as has been mentioned above, could be L-shaped, T-shaped, cross-shaped, etc., according to the type of connection to be made thereby.

Specifically, in the chosen example of embodiment a small central perimeter partition (3) is established on the body (1) corresponding to its plane of symmetry (4), and on either side thereof at least two pairs of radial and equiangularly-positioned flanges (5) are established for the axial securing of a coupling (6), with one of its mouths, which will be its inner mouth, having flanges (7) that are orthogonal or slanting inwards towards the axis of the coupling, complementary to the aforementioned flanges (5), in order to enable the coupling (6) to be connected by bayonet or pressure to the body (1).

The body (1) can be made of metal or plastic, but the coupling (6) will always be metal and elastic in nature, in order to secure the pipe (2), as will be seen below.

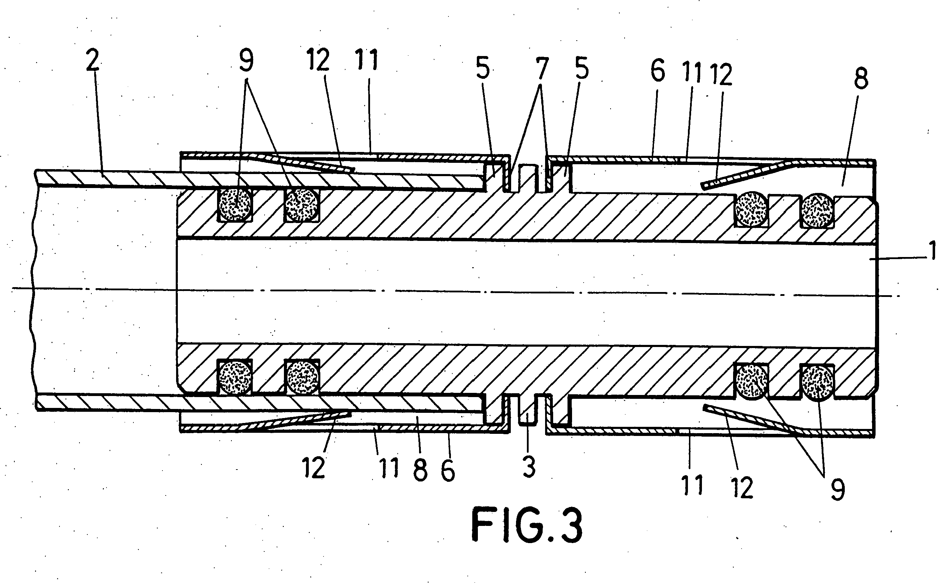

The couplings (6) can originally be pre-assembled on the body (1), as shown on the right of figure 3, forming a tubular cylindrical housing (8) into which the corresponding section of pipe (2) can be inserted using pressure, which is completely sealed against the body (1) by O-rings (9) positioned in annular channels (10) thereof, said pipe also being axially secured against the effects of the inner pressure thereof which could bring about its axial disconnection, the coupling (6) having U-shaped die cuts (11) that forms flanges (12) slanting inwards towards the inner end of the coupling (6) so that said flanges (12) are easily deformed when the pipe (2) is inserted, thus aiding the connection thereof, but tend to be driven into the wall of the pipe in the event of any force being applied in the opposite direction, that is, should there be any force that is liable to disconnect the pipe (2) from the body (1).

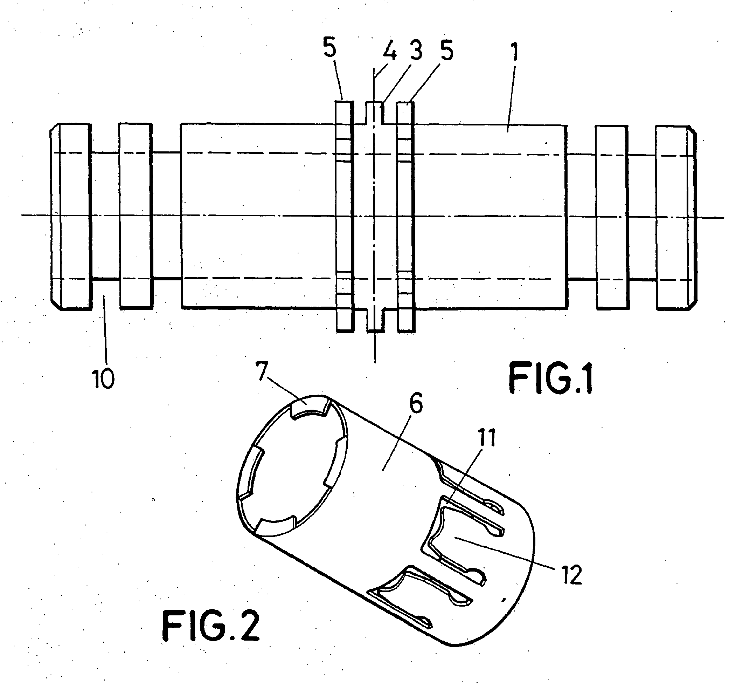

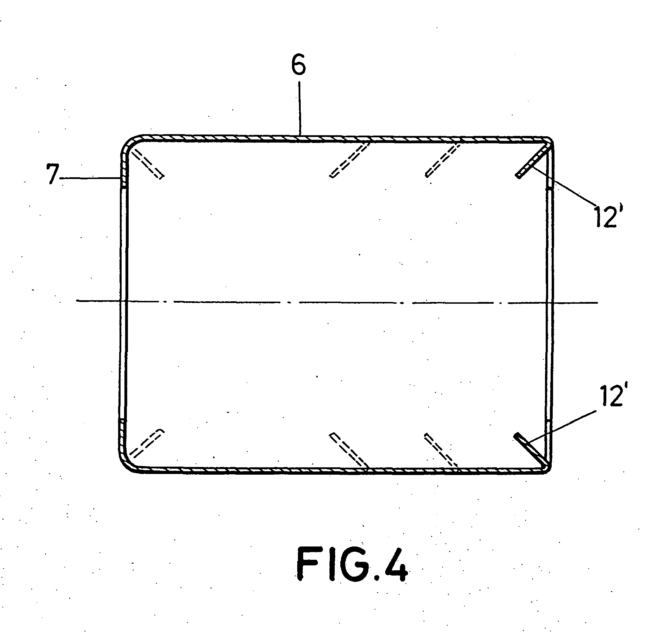

However, as is shown in the alternative embodiment in figure 4, instead of having said U-shaped die cuts (11), or in addition to these, the coupling (6) can include flanges (12') that are a prolongation of its free edge opposite the edge where the flanges (7) are situated. As in the case of figure 2, these flanges (12') will also be slanting inwards towards the inner end of the coupling (6), by the folding thereof, thus achieving the same interlocking effects as in the previous case.

## Claims

1. Connection device for plastic pipes, such as reticulated polyethylene pipes or multilayer (plastic-aluminium) pipes, **characterised in that** it is formed from a tubular body, which can take a linear, T-shaped or other form according to the type of connection to be made, and which includes at its free end, on at least one of its branches, outer perimeter channelling for connecting respective O-rings and on its inner end at least one pair of radial equiangularly-positioned flanges for the connection by means of a bayonet system of a metal coupling, which in turn has flanges on its ends for connection to the flanges of the tubular body by means of the controlled angular movement of one in relation to the other, said metal coupling including die cuts that form lateral flanges that slant inwards and aid the insertion of the pipe between the body and the coupling and which prevent it from becoming disconnected.
